(19) **Europäisches Patentamt**
**European Patent Office**
**Office européen des brevets**

(11) **EP 4 621 006 A1**

(12) **EUROPEAN PATENT APPLICATION**

(43) Date of publication:
24.09.2025   Bulletin 2025/39

(21) Application number: 24165026.6

(22) Date of filing: 21.03.2024

(51) International Patent Classification (IPC):
*C08L 23/12* *(2006.01)*

(52) Cooperative Patent Classification (CPC):
(C-Sets available)
C08L 2205/03; C08L 2207/064; C08L 2207/20
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **TORRES, Juan Pablo**
**4021 Linz (AT)**

• **JERABEK, Michael**
**4021 Linz (AT)**
• **MILEVA, Daniela**
**4021 Linz (AT)**
• **KAHLEN, Susanne Margarete**
**4021 Linz (AT)**
• **BRAUN, Hermann**
**4021 Linz (AT)**

(74) Representative: **Maiwald GmbH**
**Elisenhof**
**Elisenstraße 3**
**80335 München (DE)**

(54) **POLYPROPYLENE-POLYETHYLENE COMPOSITIONS**

(57)    The present invention relates to a polypropylene-polyethylene composition having a melt flow rate MFR$_2$ of from 1.5 to 50.0 g/10 min and obtainable by blending a mixed-plastics blend (A), a compatibilizer (B) being a C2C4 plastomer and optionally stabilizer(s), an article comprising the polypropylene - polyethylene composition and the use of said compatibilizer (B) in said polypropylene - polyethylene composition for increasing the puncture energy - stiffness (PS) balance of polypropylene - polyethylene composition in the range of 125% to 500% of the puncture energy - stiffness (PS) balance of blend (A).

EP 4 621 006 A1

(52) Cooperative Patent Classification (CPC): (Cont.)

C-Sets
**C08L 23/12, C08L 23/0815**

## Description

The present invention relates to a polypropylene-polyethylene composition having a melt flow rate $MFR_2$ of from 1.5 to 50.0 g/10 min and comprising a mixed-plastics blend (A), a compatibilizer (B) being a C2C4 plastomer and optionally stabilizer(s), an article comprising the polypropylene - polyethylene composition and the use of said compatibilizer (B) in said polypropylene - polyethylene composition for increasing the puncture energy - stiffness (PS) balance of a polypropylene - polyethylene composition in the range of 125% to the 500% of the puncture energy - stiffness (PS) balance of blend (A).

## Technical background

The use of recycled materials, which are derived from a wide variety of sources is a must in the field of polyolefins. However, the recycling streams available all suffer from limited mechanical properties not allowing commercially attractive end uses. Various expensive booster polymers have been suggested for upgrading recycling streams rendering the recycling as such uneconomical. For this reason, there is at the moment very limited market for recycled blends. In blends comprising predominantly polyethylene and polypropylene, it is relatively easy to achieve higher impact strength through the addition of elastomers acting as compatibilizers like conventional ethylene-propylene rubbers or EPDM, see Jose et al. J. Polym. Res. 20 (2013) 303. However, such addition will limit the stiffness of the resulting compositions. Moreover, many of these elastomers are only available as high molecular weight versions and/or in non-pelletized form, the latter requiring specific mixing equipment.

WO 2015/169690 A1 suggests the incorporation of heterophasic ethylene-propylene copolymers (HECOs) comprising ethylene-1-octene-copolymers, which are commercially available, i.a. from Borealis AG under the tradename Queo®, from DOW Chemical Corp (USA) under the tradename Engage®, or from Exxon Mobil (USA) under the tradename Exact®.

However, the use of arbitrary heterophasic ethylene-propylene copolymers (HECOs) is not yielding good results, particularly with respect to stiffness. It was commonly believed that the limited stiffness could only be overcome by using plastomers having block copolymer nature such as provided by Dow Chemical as Dow Infuse OBC or Intune OBC plastomers. For example, INTUNE™ polypropylene-based OBCs (PP-OBCs) have been designed as compatibilizers rather than elastomers. They contain propylene-rich blocks compatible with polypropylene and ethylene-rich blocks compatible with polyethylene.

It is readily understandable that the block copolymer introduces the options of having certain domains of higher stiffness and thereby overall increased stiffness. However, plastomers with block copolymer nature, which is easily detectable by NMR, have the disadvantage of being relatively expensive.

Therefore there was a deeply felt need of having a good balance of stiffness and good impact in recycled propylene-rich polypropylene-polyethylene blends.

The present invention is based on the surprising finding that by adding ethylene-1-butene plastomers as compatibilizer to polypropylene-polyethylene mixed-plastics blends an improved balance of properties in behalf of stiffness and impact properties is obtained.

## Summary of the invention

The present invention relates to a polypropylene-polyethylene composition comprising

a) from 75 to 99 wt.-%, preferably from 77 to 98 wt.-%, more preferably from 75 to 95 wt.-% of a mixed-plastics blend (A) comprising

A-1) polypropylene and
A-2) polyethylene,
wherein the weight ratio of polypropylene to polyethylene is from 3:7 to 49:1, preferably from 4:6 to 49:1, more preferably from 5:5 to 49:1, and

b) from 1 to 25 wt.-%, preferably from 2 to 23 wt.-%, more preferably from 5 to 20 wt.-% of a compatibilizer (B) being a C2C4 plastomer, having

- a melting temperature Tm of below 65 °C, preferably from 25 to 45 °C, more preferably from 30 to 40 °C determined according by DSC according to ISO 11357;
- a melt flow rate $MFR_2$ of from 0.1 to 5.0 g/10 min, preferably from 0.1 to 3.5 g/10 min, more preferably from 0.1 to 2.5 g/10 min, determined according to ISO 1133 at a load of 2.16 kg and a temperature of 190°C, and

- a density of from 850 to 885 kg/m$^3$, preferably from 855 to 875 kg/m$^3$, more preferably from 860 to 870 kg/m$^3$, determined according to ISO 1183,

c) from 0 to 1.0 wt.-% of a stabilizer or mixture of stabilizers,

all based on the total weight of the polypropylene-polyethylene composition,
wherein the polypropylene-polyethylene composition has a melt flow rate MFR$_2$ of from 1.5 to 50.0 g/10 min, preferably from 1.7 to 35.0 g/10 min, more preferably from 2.0 to 25.0 g/10 min, determined according to ISO 1133 at a load of 2.16 kg and a temperature of 230°C.

Further, the present invention relates to an article comprising the polypropylene - polyethylene composition as described above or below.

Still further, the present invention relates to the use of the compatibilizer (B) in the polypropylene - polyethylene composition as described above or below for increasing the puncture energy - stiffness (PS) balance of a polypropylene - polyethylene composition in the range of 125% to 500%, preferably 150% to 300% of the puncture energy - stiffness (PS) balance of blend (A), wherein the puncture energy - stiffness (PS) balance is the product of the puncture energy, determined at 23°C according to ISO 6603-2 on specimens having a 2 mm thickness, and the tensile modulus, determined at 23°C according to ISO 527-2.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below. Unless clearly indicated otherwise, use of the terms "a," "an," and the like refers to one or more.

Mixed plastics is defined as polyolefins with the presence of low amounts of compounds usually not found in virgin polypropylene blends such as polystyrenes, polyamides, polyesters, wood, paper, limonene, aldehydes, ketones, fatty acids, metals, and/or long term decomposition products of stabilizers. Virgin polypropylene blends denote blends as directly originating from the production process without intermediate use.

As a matter of definition "mixed plastics" can be equated with detectable amounts of polystyrene and/or polyamide-6 and/or limonene and/or fatty acids.

Mixed plastics thereby can originate from both post-consumer waste and industrial waste, as opposed to virgin polymers. Post-consumer waste refers to objects having completed at least a first use cycle (or life cycle), i.e. having already served their first purpose. In contrast to that, industrial waste refers to manufacturing scrap, respectively conversion scrap, which does not normally reach a consumer.

Many different kinds of polyethylene or polypropylene can be present in "recycled waste". In particular, the polypropylene fraction can comprise: isotactic propylene homopolymers, random copolymers of propylene with ethylene and/or C$_4$ - C$_8$ $\alpha$-olefins, heterophasic copolymers comprising a propylene homopolymer and/or at least one C$_2$, or C$_4$ - C$_8$ $\alpha$-olefin copolymer and an elastomeric fraction comprising copolymers of ethylene with propylene and/or a C$_4$ - C$_8$ $\alpha$-olefin, optionally containing minor amounts of a diene. Examples for the ingredients in the polyethylene fraction are given below.

The term "recycled material" such as used herein denotes materials reprocessed from "recycled waste".

The term "virgin" denotes the newly produced materials and/or objects prior to their first use, which have not already been recycled.

A polymer blend is a mixture of two or more polymeric components. In general, the blend can be prepared by mixing the two or more polymeric components. A suitable mixing procedureknown in the art is post-polymerization blending. Post-polymerization blending can be dry blending of polymeric components such as polymer powders and/or compounded polymer pellets or melt blending by melt mixing the polymeric components.

A mixed-plastic polypropylene blend indicates that the blend predominantly comprises polypropylene; however, small amounts of other plastic types are present.

A mixed-plastic polyethylene blend indicates that the blend predominantly comprises polyethylene; however, small amounts of other plastic types are present.

Recyclate blends, in particular post-consumer recyclate blends, are almost always mixed-plastic blends, which reflects the efficiency of the sorting in state of the art recycling processes.

"Polypropylene - polyethylene composition" refers to a composition containing both polypropylene and polyethylene.

A "compatibilizer" is a substance in polymer chemistry, which is added to an immiscible blend of polymers in order to increase its stability.

A polypropylene means a polymer being composed of units derived from propylene in an amount of more than 50 mol-%.

A polyethylene means a polymer being composed of units derived from ethylene in an amount of more than 50 mol-%.

The term "C2C4 plastomer" denotes a polymer combining qualities of elastomers and plastics and consisting of structural units derived from monomers consisting of ethylene and 1-butene.

If not indicated otherwise "%" refers to weight-%.

**Detailed description**

The present invention relates to a polypropylene-polyethylene composition comprising

a) from 75 to 99 wt.-%, preferably from 77 to 98 wt.-%, more preferably from 75 to 95 wt.-% of a mixed-plastics blend (A) comprising

A-1) polypropylene and
A-2) polyethylene,
wherein the weight ratio of polypropylene to polyethylene is from 3:7 to 49:1, preferably from 4:6 to 49:1, more preferably from 5:5 to 49:1, and

b) from 1 to 25 wt.-%, preferably from 2 to 23 wt.-%, more preferably from 5 to 20 wt.-% of a compatibilizer (B) being a C2C4 plastomer, having

- a melting temperature Tm of below 65 °C, preferably from 25 to 45 °C, more preferably from 30 to 40 °C determined according by DSC according to ISO 11357;
- a melt flow rate $MFR_2$ of from 0.1 to 5.0 g/10 min, preferably from 0.1 to 3.5 g/10 min, more preferably from 0.1 to 2.5 g/10 min, determined according to ISO 1133 at a load of 2.16 kg and a temperature of 190°C, and
- a density of from 850 to 885 kg/m³, preferably from 855 to 875 kg/m³, more preferably from 860 to 870 kg/m³, determined according to ISO 1183,

c) from 0 to 1.0 wt.-% of a stabilizer or mixture of stabilizers,

all based on the total weight of the polypropylene-polyethylene composition,
wherein the polypropylene-polyethylene composition has a melt flow rate $MFR_2$ of from 1.5 to 50.0 g/10 min, preferably from 1.7 to 35.0 g/10 min, more preferably from 2.0 to 25.0 g/10 min, determined according to ISO 1133 at a load of 2.16 kg and a temperature of 230°C.

It is preferred that the overall amounts of the mixed-plastics blend (A), the compatibilizer (B) and optionally the stabilizer or mixture of stabilizers together make up at least 90 wt.-% of the polypropylene-polyethylene composition, more preferably sum up to 100 wt.-%.

The polypropylene-polyethylene composition according to the present invention has a melt flow rate $MFR_2$ of from 1.5 to 50.0 g/10 min, preferably from 1.7 to 35.0 g/10 min, more preferably from 2.0 to 25.0 g/10 min, determined according to ISO 1133 at a load of 2.16 kg and a temperature of 230°C.

It has surprisingly been found that the polypropylene-polyethylene composition according to the present invention has a good balance of properties in regard of stiffness and impact properties. Thereby, the addition of the compatibilizer (B) to the mixed-plastics blend (A) decreases the stiffness of the resulting polypropylene-polyethylene composition. Said loss of stiffness, however, is overcompensated by the increase of impact properties.

It is preferred that the polypropylene-polyethylene composition according to the present invention has a tensile modulus of from 500 to 1400 MPa, more preferably from 600 to 1350 MPa, still more preferably from 650 to 1300 MPa, determined at 23°C according to ISO 527-2.

Further, the polypropylene-polyethylene composition preferably has a tensile modulus of from 1750 to 4500 MPa, more preferably from 2000 to 4250 MPa, still more preferably from 2250 to 4000 MPa, determined at -30°C according to ISO 527-2.

Additionally, the polypropylene-polyethylene composition preferably has a stress at yield of from 12.5 to 50.0 MPa, more preferably from 15.0 to 40.0 MPa, still more preferably from 16.5 to 30.0 MPa, determined at 23°C at 23°C according to ISO 527-2.

Still further, the polypropylene-polyethylene composition preferably has a stress at yield of from 30.0 to 70.0 MPa, more preferably from 35.0 to 60.0 MPa, still more preferably from 40 to 50.0 MPa, determined at -30°C according to ISO 527-2.

Moreover, the polypropylene-polyethylene composition preferably has a strain at break of from 14.0 to 600.0 %, more preferably from 15.0 to 550.0 %, still more preferably from 16.0 to 500.0 %, determined at 23°C according to ISO 527-2.

Furthermore, the polypropylene-polyethylene composition preferably has a strain at break of from 2.5 to 35.0 %, more preferably from 3.0 to 30.0 %, still more preferably from 4.0 to 25.0%, determined at -30°C according to ISO 527-2.

Further, the polypropylene-polyethylene composition preferably has a Charpy notched impact strength of from 5.0 to 50.0 kJ/m$^2$, more preferably from 6.0 to 40.0 kJ/m$^2$, still more preferably from 6.5 to 30.0 kJ/m$^2$, determined at 23°C according to ISO 179.

Still further, the polypropylene-polyethylene composition preferably has a Charpy notched impact strength of from 1.0 to 15.0 kJ/m$^2$, more preferably from 2.0 to 12.5 kJ/m$^2$, still more preferably from 2.5 to 10.0 kJ/m$^2$, determined at -20°C according to ISO 179.

Additionally, the polypropylene-polyethylene composition preferably has a Charpy notched impact strength of from 1.0 to 15.0 kJ/m$^2$, more preferably from 2.0 to 12.5 kJ/m$^2$, still more preferably from 2.5 to 10.0 kJ/m$^2$, determined at -30°C according to ISO 179

Furthermore, the polypropylene-polyethylene composition preferably has a puncture energy of from 8.5 to 35.0 J, more preferably from 10.0 to 30.0 J, still more preferably from 12.0 to 25.0 J, determined at 23°C according to ISO 6603-2 on specimens having a 2 mm thickness.

Moreover, the polypropylene-polyethylene composition preferably has a puncture energy of from 0.4 to 35.0 J, more preferably from 0.5 to 30.0 J, still more preferably from 0.6 to 25.0 J, determined at -30°C according to ISO 6603-2 on specimens having a 2 mm thickness.

It is preferred that the polypropylene-polyethylene composition has an impact - stiffness (IS) balance being the product of Charpy impact strength and tensile modulus of from 4750 to 40000 MPa·kJ/m$^2$, preferably from 5000 to 35000 MPa·kJ/m$^2$, more preferably from 5100 to 30000 MPa·kJ/m$^2$, wherein the tensile modulus is determined at 23°C according to ISO 527-2 and the Charpy impact strength is determined at 23°C according to ISO 179.

Further, the polypropylene-polyethylene composition preferably has a puncture energy - stiffness (PS) balance being the product of puncture energy and tensile modulus of from 9750 to 30000 MPa·J, preferably from 10000 to 27500 MPa·J, more preferably from 10500 to 25000 MPa·J, wherein puncture energy is determined at 23°C according to ISO 6603-2 on specimens having a 2 mm thickness and the tensile modulus is determined at 23°C according to ISO 527-2.

Still further, the polypropylene-polyethylene composition preferably has an impact - stiffness (IS-1) balance in relation to the weight amount of compatibilizer (B) of from 750 to 3000, more preferably from 800 to 2750, still more preferably from 850 to 2650, calculated according to the formula

$$IS - 1 = \frac{Charpy\ NIS \cdot TM}{wt. -\% \ (B)}$$

with

IS-1       is the impact - stiffness balance in relation to the weight amount of compatibilizer (B) in [(MPa.kJ) / (wt.-%·m$^2$)];

Charpy NIS    is the Charpy notched impact strength in kJ/m$^2$, determined at 23°C according to ISO 179;

TM       is the tensile modulus in MPa, determined at 23°C according to ISO 527-2; and

wt.-% (B)    is the weight amount of compatibilizer (B) in the polypropylene-polyethylene composition in wt.-%.

Furthermore, the polypropylene-polyethylene composition preferably has a first puncture energy - stiffness (PS-1) balance in relation to the weight amount of compatibilizer (B) of from 500 to 7500, more preferably from 600 to 7000, still more preferably from 750 to 6000, calculated according to the formula

$$PS - 1 = \frac{PE\ (23°C) \cdot TM}{wt. -\% \ (B)}$$

with

PS-1       is the first puncture energy - stiffness balance in relation to the weight amount of compatibilizer (B) in [(MPa.J) / wt.-%];

PE (23°C)    is the puncture energy in J, determined at 23°C according to ISO 6603-2 on specimens having a 2 mm thickness;

TM          is the tensile modulus in MPa, determined at 23°C according to ISO 527-2; and

wt.-% (B)       is the weight amount of compatibilizer (B) in the polypropylene-polyethylene composition in wt.-%.

Additionally, the polypropylene-polyethylene composition preferably has a second puncture energy - stiffness (PS-2) balance in relation to the weight amount of compatibilizer (B) of from 40 to 1200, more preferably from 50 to 1100, still more preferably from 60 to 1000, calculated according to the formula

$$PS-2 = \frac{PE\,(-30°C) \cdot TM}{wt.-\%\,(B)}$$

with

PS-2          is the second puncture energy - stiffness balance in relation to the weight amount of compatibilizer (B) in [(MPa·J) / wt.-%];

PE (-30°C)     is the puncture energy in J, determined at -30°C according to ISO 6603-2 on specimens having a 2 mm thickness;

TM          is the tensile modulus in MPa, determined at 23°C according to ISO 527-2; and

wt.-% (B)       is the weight amount of compatibilizer (B) in the polypropylene-polyethylene composition in wt.-%.

The polypropylene-polyethylene composition is preferably obtainable, more preferably obtained by blending, preferably melt-blending the mixed-plastics blend (A), the compatibilizer (B) and optionally the stabilizer or mixture of stabilizers.

In the following, the mixed-plastics blend (A), the compatibilizer (B) and the optional stabilizer(s) are described in more detail.

Mixed-plastics blend (A)

The polypropylene-polyethylene composition comprises a mixed-plastics blend (A).

The mixed-plastics blend (A) usually is a recycled material based on a mix of polypropylene and polyethylene.

The weight ratio of polypropylene to polyethylene in the mixed-plastics blend (A) is from 3:7 to 49:1, preferably from 4:6 to 49:1, more preferably from 5:5 to 49:1.

Preferably, the recycled material is obtained from recycled waste by means of plastic recycling processes known in the art. Such recyclates are commercially available, e.g. from Corepla (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE), Mtm Plastics GmbH (DE), Borealis AG (AT) etc. Non-exhaustive examples of polypropylene rich recycled materials include Dipolen® S, Dipolen® PP and Purpolen® PP (Mtm Plastics GmbH), Axpoly® recycled polypropylene pellets (Axion Ltd) and PolyPropylene Copolymer (BSP Compounds).

During recycling, any reasonable measure will usually be taken for any components other than polyethylene and polypropylene to be reduced/removed as far as the final application or use suggests such measures; however, other components are often present in small amounts.

Other such components include polystyrene (PS), polyamides (PA), polyethylene terephthalate (PET), which are all present in as low an amount as possible, preferably below the detection limit.

The mixed-plastics blend (A) preferably has a melt flow $MFR_2$, determined according to ISO 1133 at 230 °C and 2.16 kg, in the range from 1.0 to 30.0 g/10min, more preferably of 2.5 to 25.0 g/10min.

Further, the mixed-plastics blend (A) preferably has a density of from 905 to 955 kg/m³, more preferably from 905 to 952 kg/m³, still more preferably from 905 to 950 kg/m³, determined according to ISO 1183.

The mixed-plastics blend (A) can be characterized by crystallization extraction (CRYSTEX) using trichlorobenzene (TCB) as a solvent. This method is described below in the determination methods section. The crystalline fraction (CF) contains for the most part the matrix phase and only a small part of the elastomeric phase and the soluble fraction (SF) contains for the most part the elastomeric phase and only a small part of the matrix phase. In some cases, this method results in more useful data compared to xylene extraction, since the crystalline fraction (CF) and the soluble fraction (SF) more accurately correspond to the matrix and elastomeric phases, respectively. Due to the differences in the separation methods of xylene extraction and crystallization extraction (CRYSTEX) the properties of XCS/XCI fractions on the one hand and crystalline/soluble (CF/SF) fractions on the other hand are not exactly the same, meaning that the amounts of matrix phase and elastomeric phase can differ as well as the properties.

Generally, the crystalline fraction (CF) content and the soluble (SF) content of a composition only relate to its polymeric components, i.e. without other components, which are insoluble and therefore not part of the dissolution and crystallization cycles as described below in the determination method.

In the present case the mixed-plastics blend (A) is usually fully soluble in trichlorobenzene (TCB) so that the crystalline fraction (CF) content and the soluble (SF) content relate to the total content of the mixed-plastics blend (A). Thus, the crystalline fraction (CF) content and the soluble fraction (SF) content preferably make up 100 wt.-% of the mixed-plastics blend (A).

The mixed-plastics blend (A) preferably shows one or all of the following properties in the crystallization extraction (CRYSTEX) analysis:

- a crystalline fraction (CF) content determined by crystallization extraction (CRYSTEX) in the range from 80.0 to 96.0 wt.-%, preferably from 82.5 to 95.5 wt.-%, more preferably from 85.0 to 95.0 wt.-%, based on the total weight of the mixed-plastics blend (A); and
- a soluble fraction (SF) content determined by crystallization extraction (CRYSTEX) in the range from 4.0 to 20.0 wt.-%, preferably from 4.5 to 17.5 wt.-%, more preferably from 5.0 to 15.0 wt.-%, based on the total weight of the mixed-plastics blend (A).

Said crystalline fraction (CF) preferably has one or more, preferably all of the following properties:

- an ethylene content (C2(CF)), as determined by FT-IR spectroscopy calibrated by quantitative $^{13}$C-NMR spectroscopy, in the range of from 2.5 to 55.0 wt.-%, preferably from 3.5 to 52.5 wt.-%, more preferably from 5.0 to 50.0 wt.-%; and/or
- an intrinsic viscosity (iV(CF)), as measured in decalin according to DIN ISO 1628/1 at 135°C, of less than 2.5 dl/g, preferably in the range of from 1.1 to 2.3 dl/g, more preferably from 1.4 to 2.1 dl/g.

Said soluble fraction (SF) preferably has one or more, preferably all of the following properties:

- an ethylene content (C2(SF)), as determined by FT-IR spectroscopy calibrated by quantitative $^{13}$C-NMR spectroscopy, in the range of from 20.0 to 55.0 wt.-%, preferably from 22.0 to 52.5 wt.-%, more preferably from 24.0 to 50.0 wt.-%; and/or
- an intrinsic viscosity (iV(SF)), as measured in decalin according to DIN ISO 1628/1 at 135°C, in the range of from 0.9 to 2.1 dl/g, preferably from 1.0 to 2.0 dl/g, more preferably from 1.1 to 1.9 dl/g.

The mixed-plastics blend (A) preferably has a relative amount of units derived from ethylene of from 3.5 to 60.0 wt.-%, preferably from 4.5 to 55.0 wt.-%, more preferably from 5.0 to 50.0 wt.-%, based on the total weight of mixed-plastics blend (A).

The mixed-plastics blend (A) preferably has an inorganic residue content, as determined by calcination analysis according to DIN ISO 1172:1996, of 0.05 to 3.0 wt.-%, more preferably in the range from 0.5 to 2.5 wt.-%, most preferably in the range from 1.0 to 2.5 wt.-%

The mixed-plastics blend (A) preferably originates from post-industrial waste or post-consumer waste, most preferably from post-consumer waste. That means that the blend (A) is recovered from waste plastic material.

The mixed-plastics blend (A) preferably has a limonene content, determined by solid phase microextraction (HS-SPME-GC-MS), in the range from 0.1 to 100 ppm, preferably from 0.1 to 50 ppm, more preferably from 0.1 to 35 ppm.

The presence of limonene is indicative that mixed-plastics blend (A) originates from post-consumer waste.

Further indications of the recycled-nature of the mixed-plastics blend (A) include the presence of other polymers, such as polystyrene and polyamide-6, and the presence of fatty acids.

Accordingly, it is further preferred that the mixed-plastics blend (A) comprises one or more of polystyrene, polyamide-6 and fatty acids, preferably comprises each of polystyrene, polyamide-6 and fatty acids.

The mixed-plastics blend (A) preferably has a tensile modulus of from 600 MPa to 1500 MPa, preferably from 650 MPa to 1400 MPa, still more preferably from 700 to 1300 MPa, determined at 23°C according to ISO 527-2.

Further, the mixed-plastics blend (A) preferably has a Charpy Notched Impact Strength at 23°C (CNIS at 23°C) of from 2.5 to 10.0 kJ/m$^2$, more preferably from 3.5 to 9.0 kJ/m$^2$, still more preferably from 4.0 to 8.0 kJ/m$^2$, determined at 23°C according to ISO 179.

Before blending with the other components for preparing the polypropylene-polyethylene composition the mixed-plastics blend (A) can be aerated, e.g. as described in EP 3 786 190 A1, for removing volatile components.

Compatibilizer (B)

The polypropylene-polyethylene composition further comprises a compatibilizer (B).

The compatibilizer (B) is a C2C4 plastomer.

The C2C4 plastomer is a plastomeric copolymer, i.e. having elastomeric properties and plastics properties, containing ethylene monomers and 1-butene comonomers.

It is thereby preferred that the 1-butene comonomer is incorporated into the C2C4 plastomer in random form so that the C2C4 plastomer is a random copolymer of ethylene and 1-butene.

A random copolymer differentiates from a block copolymer, which has ethylene rich blocks and 1-butene rich blocks in the polymer chain.

The compatibilizer (B) preferably is a virgin polymer, which is compounded to the other components of the polypropylene-polyethylene composition according to the invention.

Residual C2C4 plastomer, which may be present in the mixed-plastic blend (A) is not subsumed under compatibilizer (B).

The compatibilizer (B) has a melt flow rate ($MFR_2$), determined according to ISO 1133 at 190 °C and 2.16 kg, in the range from 0.1 to 5.0 g/10 min, more preferably from 0.1 to 3.5 g/10 min, still more preferably from 0.1 to 2.5 g/10 min.

Further, the compatibilizer (B) has a density of from 850 to 885 $kg/m^3$, preferably from 855 to 875 $kg/m^3$, more preferably from 860 to 870 $kg/m^3$, determined according to ISO 1183.

Still further, the compatibilizer (B) has a melting temperature Tm of below 65 °C, preferably from 25 to 45 °C, more preferably from 30 to 40 °C, determined by DSC according to ISO 11357.

Furthermore, the compatibilizer (B) preferably has a glass transition temperature Tg of -40 to - 75°C, preferably -45 to -70°C, more preferably -50 to -65°C, determined by DSC according to ISO 11357.

C2C4 plastomers are usually polymerized in the presence of a metallocene catalyst in solution polymerization. Suitable metallocene catalysts and polymerization conditions suitable for the production of the C2C4 plastomers are well established in the art.

C2C4 plastomers suitable as compatibilizer (B) can also be commercially available e.g. from DOW Chemical Corp (USA) under the tradename Engage®.

Stabilizer(s)

The polypropylene-polyethylene composition of the present invention may contain up to 1.0 wt.-% of a stabilizer or a mixture of stabilizers. Preferably stabilizers are contained in an amount of 0.1 to 1.0 wt.-%, based on the total weight of the polypropylene-polyethylene composition.

Stabilizers are well known in the art and can be for example antioxidants, anti-acids, antiblocking agents, anti-UV's, nucleating agents or antistatic agents.

Examples of antioxidants which are commonly used in the art, are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693- 36-7, sold as Irganox PS-802 FL™ by BASF), nitrogen-based antioxidants (such as 4,4'- bis(1,1'-dimethylbenzyl) diphenylamine), or antioxidant blends.

Anti-acids are also commonly known in the art. Examples are calcium stearates, sodium stearates, zinc stearates, magnesium and zinc oxides, synthetic hydrotalcite (e.g. SHT, CAS-No. 11097-59-9), lactates and lactylates, as well as calcium stearate (CAS No. 1592-23-0) and zinc stearate (CAS No. 557-05-1);

Common antiblocking agents are natural silica such as diatomaceous earth (such as CAS No. 60676-86-0 (SuperfFloss™), CAS-No. 60676-86-0 (SuperFloss E™), or CAS-No. 60676-86-0 (Celite 499™)), synthetic silica (such as CAS-No. 7631-86-9, CAS-No. 7631-86-9, CAS-No. 7631-86-9, CAS-No. 7631-86-9, CAS-No. 7631-86-9, CAS-No. 7631-86-9, CAS-No. 112926-00-8, CAS-No. 7631-86-9, or CAS-No. 7631-86-9), silicates (such as aluminium silicate (Kaolin) CAS-no. 1318-74-7, sodium aluminum silicate CAS-No. 1344-00-9, calcined kaolin CAS-No. 92704-41-1, aluminum silicate CAS-No. 1327-36-2, or calcium silicate CAS-No. 1344-95-2), synthetic zeolites (such as sodium calcium aluminosilicate hydrate CAS-No. 1344-01-0, CAS-No. 1344-01-0, or sodium calcium aluminosilicate, hydrate CAS-No. 1344-01-0).

Anti-UVs are, for example, Bis-(2,2,6,6-tetramethyl-4-piperidyl)-sebacate (CAS -No. 52829-07-9, Tinuvin 770); 2-hydroxy-4-n-°Ctoxy-benzophenone (CAS-No. 1843-05-6, Chimassorb 81). Nucleating agents like sodium benzoate (CAS No. 532-32-1); 1,3:2,4-bis(3,4-dimethylbenzylidene)sorbitol (CAS 135861-56-2, Millad 3988).

Suitable antistatic agents are, for example, glycerol esters (CAS No. 97593-29-8) or ethoxylated amines (CAS No. 71786-60-2 or 61791-31-9) or ethoxylated amides (CAS No. 204-393-1). Usually these stabilizers are added in quantities of 100-2.000 ppm for each individual component of the polymer

Article

In a further aspect, the present invention relates to an article comprising the polypropylene - polyethylene composition as described above or below.

Thereby, it is preferred that all aspects of the polypropylene - polyethylene composition and its components as described above or below are applied on the article.

The article can comprise a weight majority of the polypropylene - polyethylene composition as described above or below, i.e. from more than 50 wt.-% to 100 wt.-% of the article.

Usually, however, the polypropylene - polyethylene composition as described above or below is melt blended with other polymeric components, usually virgin polymeric components, and non-polymeric components, such as additives, fillers and pigments, before forming the article. Thereby, the amount of polypropylene - polyethylene composition in the article is preferably in the range of from 10 wt.-% to 75 wt.-% of the article.

Use

In a further aspect the present invention relates to the use of the compatibilizer (B) in the polypropylene - polyethylene composition as described above or below for increasing the puncture energy - stiffness (PS) balance of a polypropylene - polyethylene composition in the range of 125% to 500%, preferably 150% to 300% of the puncture energy - stiffness (PS) balance of blend (A),

wherein the puncture energy - stiffness (PS) balance is the product of the puncture energy, determined at 23°C according to ISO 6603-2 on specimens having a 2 mm thickness, and the tensile modulus, determined at 23°C according to ISO 527-2.

Thereby, it is preferred that all aspects of the polypropylene - polyethylene composition and its components as described above or below are applied on the use.

The present invention will now be described in further detail by the examples provided below.

**Examples**

The following Examples are included to demonstrate certain aspects and embodiments of the invention as described in the claims. It should be appreciated by those of skill in the art, however, that the following description is illustrative only and should not be taken in any way as a restriction of the invention.

**A. Measuring methods**

The following definitions of terms and determination methods apply for the above general description of the invention as well as to the below examples unless otherwise defined.

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer.

The $MFR_2$ of polypropylene is determined at a temperature of 230 °C and a load of 2.16 kg.

The $MFR_2$ of polyethylene is determined at a temperature of 190 °C and a load of 2.16 kg.

**Determination of the content of isotactic polypropylene (iPP), polystyrene (PS), ethylene and Polyamide-6**

Calibration standards were prepared by blending iPP and HDPE to create a calibration curve. The thickness of the films of the calibration standards were 300 $\mu$m. For the quantification of the iPP, PS and PA 6 content in the samples quantitative IR spectra were recorded in the solid-state using a Bruker Vertex 70 FTIR spectrometer. Spectra were recorded on 25x25 mm square films of 50-100 $\mu$m thickness prepared by compression moulding at 190°C and 4 to 6 mPa. Standard transmission FTIR spectroscopy was employed using a spectral range of 4000 to 400 cm$^{-1}$, an aperture of 6 mm, a spectral resolution of 2 cm$^{-1}$, 16 background scans, 16 spectrum scans, an interferogram zero filling factor of 32 and Norton Beer strong apodisation.

The absorption of the band at 1167 cm$^{-1}$ in iPP was measured and the iPP content was quantified according to a calibration curve (absorption/thickness in cm versus iPP content in wt.-%).

The absorption of the band at 1601 cm$^{-1}$ (PS) and 3300 cm$^{-1}$ (PA6) were measured and the PS- and PA6 content quantified according to the calibration curve (absorption/thickness in cm versus PS and PA content in wt.-%). The content of ethylene was obtained by subtracting the content of iPP, PS and PA6 from 100. The analysis was performed as double determination.

References

[1] Van Gemert L. J., Odour Thresholds: Compilations of odour threshold values in air, water and other media, Utrecht, Oliemans Punter & Partners BV, 2011.

**Determination of Crystalline and soluble fractions and their respective properties (IV and Ethylene content) via crystallisation extraction (CRYSTEX)**

The crystalline (CF) and soluble fractions (SF) of the polypropylene (PP) compositions as well as the comonomer content and intrinsic viscosities of the respective fractions were analyzed by use of the Crystex (crystallisation extraction) method. Potential instruments that can be used are Crystex QC or Crystex 42 (Polymer Char; Valencia, Spain). Details of the technique and the method can be found in literature (Ljiljana Jeremic, Andreas Albrecht, Martina Sandholzer & Markus Gahleitner (2020): Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (IV) an online 2-capillary viscometer is used.

IR4 detector is a multiple wavelength detector measuring IR absorbance at two different bands (CH3 stretching vibration (centred at app. 2960 cm$^{-1}$) and the CH stretching vibration (2700-3000 cm$^{-1}$) that are serving for the determination of the concentration and the Ethylene content in Ethylene-Propylene copolymers. IR4 detector is calibrated with series of 8 EP copolymers with known Ethylene content in the range of 2 wt.-% to 69 wt.-% (determined by 13C-NMR) and each at various concentrations, in the range of 2 and 13mg/ml. To encounter for both features, concentration and ethylene content at the same time for various polymer concentration expected during Crystex analyses the following calibration equations were applied:

$$\text{Conc} = a + b*Abs(CH) + c*(Abs(CH))^2 + d*Abs(CH_3) + e*(Abs(CH_3)^2 + f*Abs(CH)*Abs(CH_3) \qquad \text{(Equation 1)}$$

$$CH_3/1000C = a + b*Abs(CH) + c*Abs(CH_3) + d*(Abs(CH_3)/Abs(CH)) + e* (Abs(CH_3)/Abs(CH))^2 \qquad \text{(Equation 2)}$$

The constants a to f for equation 1 and a to e for equation 2 were determined by using least square regression analysis.

The CH$_3$/1000C is converted to the ethylene content in wt.-% using following relationship:

$$\text{wt.-\% (Ethylene in EP Copolymers)} = 100 - CH_3/1000TC * 0.3 \qquad \text{(Equation 3)}$$

Amount of Soluble fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 Wt%. A linear calibration curve is used.

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP copolymers and PP polymers with IV = 2-4 dL/g. The determined calibration curve is linear.

The samples to be analyzed are weighed out in concentrations of 10 mg/ml to 20mg/ml.

After automated filling of the vial with 1,2,4-TCB containing 250 mg/l 2,6-tert-butyl-4-methylphenol (BHT) as antioxidant, the sample is dissolved at 170°C until complete dissolution is achieved with either constant stirring or gentle shaking. To avoid sample degradation, polymer solution is blanketed with the N2 atmosphere during dissolution.

For PP composition containing inorganic fillers or pigments or any other non-TCB soluble polymeric substances removal of these is required. This can be done by hot filtration prior injection.

A defined volume of the polymer solution is injected into the column filled with inert support where the crystallization of the sample and separation of the soluble fraction from the crystalline fraction is taking place. This process is repeated two times. During the first injection the whole sample is measured at high temperature, determining the IV[dl/g] and the C2[wt%] of the PP composition. During the second injection the soluble fraction (at low temperature) and the crystalline fraction (at high temperature) with the crystallization cycle are measured (Wt% SF, Wt% C2, IV).

**Intrinsic viscosity**

The intrinsic viscosity (iV) was measured according to DIN ISO 1628/1, October 1999 (in Decalin at 135 °C).

**Density:**

The density is measured according to ISO 1183-187. Sample preparation is done by compression moulding in accordance with ISO 1872-2:2007.

**DSC analysis, melting temperature ($T_m$) , heat of fusion (Hf), crystallization temperature ($T_c$), heat of crystallization ($H_c$) and glass to rubber transition temperature (Tg)** were measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature ($T_c$) and crystallization enthalpy ($H_c$) are determined from the cooling step, while melting temperature ($T_m$) and melting enthalpy ($H_m$) are determined from the second heating step. Tg was evaluated as the inflection point of the reversing heat flow in a temperature modulated experiment. The sample was heated from -85°C at 2°C/min superimposing a modulation of 0.32°C every 60 seconds.

**Charpy notched impact strength**

The Charpy notched impact strength (NIS) is measured according to ISO 179 1eA at +23 °C, - 20°C or-30 °C, using injection moulded bar test specimens of $80{\times}10{\times}4$ mm$^3$ prepared in accordance with ISO 19069-2 using a melt temperature of 230 °C for all materials irrespective of material melt flow rate.

**Tensile properties**

The tensile properties (tensile modulus, tensile strength, tensile stain at strength, tensile stress at break, tensile strain at break) were determined acc. ISO 527-2 method B on 1A ISO 527-2 or 1B ISO 527-2 dogbones. Following the standard, a testspeed of 1mm/min was used for tensile modulus and 50mm/min for all other properties. The testing temperature was +23±2°C or - 30±2°C. Injection or compression moulding was carried out according to ISO 19069-2.

**Instrumented Puncture Test** - **Puncture energy**

Maximum force, deflection at maximum force, energy to maximum force, puncture deflection and puncture energy were determined in the instrumented puncture impact behaviour test according to ISO 6603-2. The specimens were injection moulded plaques according to (ISO 19069-2 for PP) and cut to dimensions of 60 mm $\times$ 60 mm $\times$ 2 mm. The testing conditions used were: impact velocity of 4.4 m/s, with 20 mm diameter lubricated striker, at 23±2°C. The specimens were clamped with a support ring of 40 mm diameter.

**Limonene detection**

The determination of limonene is based on a static headspace (HS) approach. This analysis uses a combination of a HS sampler with a gas chromatograph (GC) and a mass spectrometer (MS) for screening purposes.

Samples were delivered to the lab in sealed aluminium-coated polyethylene (PE) bags. Prior to the analysis, samples were cryo-milled, a portion of 2.000 ± 0.100 g was weighed in a 20 ml HS vial and tightly closed. For every sample, a double determination was performed.

HS/GC/MS parameters

• HS parameters (Agilent G1888 Headspace Sampler)

| | |
|---|---|
| Vial equilibration time: | 120 min (sample), 5 min (standard) |
| Oven temperature: | 100 °C (sample), 200 °C (standard) |
| Loop temperature: | 110 °C (sample), 205 °C (standard) |
| Transfer line temperature: | 120 °C (sample), 210 °C (standard) |
| Low shaking | |

- GC parameters (Agilent 7890A GC System)

|  |  |
|---|---|
| Column: | ZB-WAX 7HG-G007-22 (30 m × 250 μm × 1 μm) |
| Carrier gas: | Helium 5.0 |
| Flow: | 2 ml/min |
| Split: | 5:1 |
| GC oven program: | 35 °C for 0.1 min |
|  | 10 °C/min until 250 °C |
|  | 250 °C for 1 min |

- MS parameters (Agilent 5975C inert XL MSD)

|  |  |  |
|---|---|---|
| Acquisition mode: |  | Scan |
| Scan parameters: |  |  |
|  | Low mass: | 20 |
|  | High mass: | 200 |
|  | Threshold: | 10 |

- Software/Data evaluation

MSD ChemStation E.02.02.1431
MassHunter GC/MS Acquisition B.07.05.2479
AMDIS GC/MS Analysis Version 2.71
NIST/EPA/NIH Mass Spectral Library (2011 version)
NIST Mass Spectral Search Program Version 2.0 g

- AMDIS deconvolution parameters

|  |  |
|---|---|
| Minimum match factor: | 80 |
| Threshold: | Low |
| Scan direction: | High to Low |
| Data file format: | Agilent files |
| Instrument type: | Quadrupole |
| Component width: | 20 |
| Adjacent peak subtraction: | Two |
| Resolution: | High |
| Sensitivity: | Very high |
| Shape requirements: | Medium |
| Solvent tailing: | 91 m/z |
| Column bleed: | 207 m/z |
| Min. model peaks: | 2 |
| Min. S/N: | 10 |
| Min. certain peaks: | 0.5 |

- MSD ChemStation integration parameters

|  |  |
|---|---|
| Integrator: | ChemStation |
| Initial area reject: | 0 |
| Initial peak width: | 0.005 |
| Shoulder detection: | off |
| Initial threshold: | 10.5 |

In this study, the statement "below the limit of detection (< LCD)" describes a condition where either the match factor is below 80 (AMDIS) or the signal to noise ratio (Pk-pk S/N = Corrected signal/Pk-pk noise, MSD ChemStation signal to noise report) of the peak in the sample run is below 3. The results refer solely to the measured samples, time of measurement and the applied parameters.

Standard solutions

For a positive identification and comparison with the (lowest) odour detection thresholds (ODT), a limonene standard was used.

For the HS/GC/MS analysis, 5 μl of the respective standard was injected in a 20 ml HS vial, tightly closed and measured.

Assuming full vaporisation of the standard substance, the concentration limonene in the HS $c_G$ was estimated as listed in **Fehler! Verweisquelle konnte nicht gefunden werden..**

**Table 1: Calibration standard and ODT**

| Analyte | Solvent | $c_G$ / mg m$^{-3}$ | Target ion (m/z) | (lowest) ODT / mg m$^{-3}$ [1] |
|---|---|---|---|---|
| Limonene | 2-Butanol | 75 | 68 | 0.21 |

Data evaluation

The concentration of an analyte in the HS $c_G$ is calculated by considering the substance amount $m_G$ and the available HS volume $V_G$ (Equation 1).

$$c_G^{Standard}[\text{mg/m}^3] = \frac{m_G^{Standard}}{V_G^{Standard}}$$

**Equation 1**

To estimate the concentration of an analyte in the HS above a polymer sample, the response factor, *Rf* of a one-point calibration is required (Equation 2). By integrating the extracted ion chromatogram (EIC), the peak area is obtained for the analyte. The corresponding target ion is listed in **Fehler! Verweisquelle konnte nicht gefunden werden..**

$$Rf = \frac{c_G^{Standard}}{\text{Peak area}^{Standard}}$$

**Equation 2**

The concentration of an analyte in the HS above a polymer sample, $c_G^{Sample}$ is calculated by multiplying the response factor with the EIC peak area of the sample (Equation 3).

$$c_G^{Sample}[\text{mg/m}^3] = Rf * \text{Peak area}^{Sample}$$

**Equation 3**

Additionally, the odour relevance of an analyte in the HS above a polymer sample is estimated by the odour activity value (OAV). Therefore, the concentration of an analyte in the HS above a polymer sample $c_G^{Sample}$ is compared with the (lowest) odour detection threshold (ODT) found in literature (Equation 4) [1]. A value above 1 indicates the relevance of an analyte to the odour at the given HS temperature.

$$OAV = \frac{c_G^{Sample}[\text{mg/m}^3]}{\text{ODT }[\text{mg/m}^3]}$$

**Equation 4**

Considerations and limitations

It must be considered that the ODT for some substances is below the detection limit (LOD) of the method. Therefore, components below the LOD might be missed although still relevant to the overall odour.

The OAV is based on the assumption that the HS parameters are somewhat relatable to the measurement conditions of an ODT determination. Of course, this is not fully applicable because temperature settings of 100 °C are not necessarily chosen for such experiments and have therefore limited practical value. Nevertheless, this approach can at least indicate the odour relevance of the defined marker substances.

References

[1] Van Gemert L. J., Odour Thresholds: Compilations of odour threshold values in air, water and other media, Utrecht, Oliemans Punter & Partners BV, 2011.

**2. Examples**

**Mixed-plastics blends (A)**

Table 1 shows the properties of the polypropylene / polyethylene blends A-1 and A-2 as used for the evaluation.

**Table 1:** Properties of Polypropylene / Polyethylene Blends Mixtures (Blend A-1 and A-2)

|  | Blend A-1 | Blend A-2 |
|---|---|---|
| PP / PE ratio | 91 /9 | 55 / 45 |
| C2 (Blend A, total), wt.-% | 9.9 | 45 |
| iV (Blend A, total), dl/g | 1.73 | 1.85 |
| Density, kg/m$^3$ | 915 | 946 |
| Recycling origin | Yes, households | Yes, households |
| Limonene, ppm | > 0.1 | > 0.1 |
| MFR$_2$ (230°C, ISO1133), g/10min | 21.2 | 7.5 |
| CF (CRYSTEX), wt% | 90.2 | 91 |
| iV (CF), dl/g | 1.75 | 1.90 |
| C2 (CF), wt% | 8.3 | 47 |
| SF (CRYSTEX), wt% | 9.8 | 9 |
| iV (SF), dl/g | 1.38 | 1.25 |
| C2 (SF), wt% | 28.2 | 47 |
| Tensile modulus, ISO 527-2, MPa | 1270 | 900 |
| Charpy NIS + 23 °C, ISO 179 1eA, kJ/m$^2$ | 5.9 | 7 |

**Compatibilizer (B)**

As compatibilizer (B) the following commercially available ethylene-co-1-butene polymers (C2C4 plastomers) were used:

B-1    An ethylene-co-1-butene polymer having a density of 862 kg/m$^3$, a melt flow rate MFR$_2$ (190°C, ISO1133) of 1.2 g/10 min and a melt temperature Tm of 34°C, commercially available as Engage™ 7467 from Dow.

B-2    An ethylene-co-1-butene polymer having a density of 860 kg/m$^3$, a melt flow rate MFR$_2$ (190°C, ISO1133) of <0.5 g/10 min and a melt temperature Tm of 37°C, commercially available as Engage™ 7487 from Dow.

**Preparation of the polypropylene-polyethylene composition**

Blend (A) and compatibilizer (B) were melt blended on a co-rotating twin screw extruder in the amounts indicated in Table 2 below.

Table 2: Compositions of the inventive and comparative examples

|  | A-1 [wt.-%] | A-2 [wt.-%] | B-1 [wt.-%] | B-2 [wt.-%] |
|---|---|---|---|---|
| CE1 | 100 | - | - | - |
| IE1 | 95 | - | 5 | - |
| IE2 | 90 | - | 10 | - |
| IE3 | 80 | - | 20 | - |
| IE4 | 95 | - | - | 5 |
| IE5 | 90 | - | - | 10 |
| CE2 | - | 100 | - | - |
| IE6 | - | 98 | 2 | - |
| IE7 | - | 95 | 5 | - |
| IE8 | - | 90 | 10 | - |

The properties of the comparative and inventive compositions are summarized in Table 3.

Table 3: Properties of CE1, CE2 and IE1-8

|  |  | CE1 | IE1 | IE2 | IE3 | IE4 | IE5 | CE2 | IE6 | IE7 | IE8 |
|---|---|---|---|---|---|---|---|---|---|---|---|
| MFR$_2$ | g/10 min | 21.2 | 19.4 | 17.6 | 14.8 | 18.6 | 16.9 | 2.6 | 2.4 | 2.4 | 2.2 |
| Tensile modulus, 23°C | MPa | 1270 | 1220 | 1110 | 922 | 1200 | 1070 | 849 | 797 | 748 | 670 |
| Yield stress, 23°C | MPa | 25.3 | 23.3 | 21.5 | 18.7 | 23.5 | 21.5 | 20.86 | 19.6 | 18.8 | 17.1 |
| Strain @ break, 23°C | % | 13.8 | 17.7 | 5.5 | 52.7 | 19.1 | 26.3 | 94.6 | 170 | 450 | 470 |
| Tensile modulus, -30°C | MPa | 3820 | 3430 | 3010 | 2620 | 3460 | 3130 | 3150 | 2910 | 2620 | 2550 |
| Yield stress, -30°C | MPa | 50.9 | 48.4 | 49.7 | 43.3 | 48.7 | 43.7 | 48.2 | 43.6 | 41.6 | 41.2 |
| Strain @ break, -30°C | % | 8.5 | 4.6 | 5.5 | 6.4 | 5.0 | 6.2 | 5.3 | 5.9 | 17.1 | 18.2 |
| CNIS, 23°C | kJ/m$^2$ | 5.9 | 6.6 | 8.2 | 27.5 | 6.8 | 9.0 | 5.5 | 6.6 | 7.9 | 20.6 |
| CNIS, -30°C | kJ/m$^2$ | 7.4 | 3.3 | 4.5 | 7.7 | 2.6 | 3.5 | 2.7 | n.m. | n.m. | n.m. |
| IPT Puncture energy, 23°C | J | 7.5 | 15.7 | 20.2 | 19.4 | 13.4 | 16.9 | 6.3 | 13.6 | n.m. | 19.0 |
| IPT Puncture energy, -30°C | J | 0.52 | 2.98 | 8.66 | 18.85 | 0.86 | 0.61 | 0.63 | 0.68 | n.m. | 11.86 |
| IS balance | MPa·kJ/m$^2$ | 7531 | 8076 | 9135 | 25346 | 8124 | 9641 | 4686 | 5236 | 5924 | 13829 |
| PS balance | MPa·J | 9525 | 19191 | 22422 | 17850 | 16032 | 18115 | 5349 | 10807 | n.m. | 12750 |
| IS-1 balance | (MPa·kJ)/(wt.-% ·m$^2$) | n.a. | 1615 | 913 | 1267 | 1624 | 964 | n.a. | 2618 | 1184 | 1382 |
| PS-1 balance | (MPa·J)/wt.-% | n.a. | 3838 | 2242 | 892 | 3206 | 1811 | n.a. | 5403 | n.m. | 1275 |

(continued)

| | | CE1 | IE1 | IE2 | IE3 | IE4 | IE5 | CE2 | IE6 | IE7 | IE8 |
|---|---|---|---|---|---|---|---|---|---|---|---|
| PS-2 balance | (MPa·J)/wt.-% | n.a. | 727 | 961 | 868 | 206 | 65 | n.a. | 270 | n.m. | 794 |

n.m. = not measured
n.a. = not applicable
IS balance = Charpy impact strength, 23°C · tensile modulus, 23°C
PS balance = puncture energy, 23°C · tensile modulus, 23°C

$$IS - 1 = \frac{Charpy\ NIS \cdot TM}{wt. -\% \ (B)}$$

$$PS - 1 = \frac{PE\ (23°C) \cdot TM}{wt. -\% \ (B)}$$

$$PS - 2 = \frac{PE\ (-30°C) \cdot TM}{wt. -\% \ (B)}$$

Unsurprisingly, by adding the compatibilizer (B) to the blend (A) the stiffness, measured as tensile modulus, of the resulting composition decreases and the impact properties, measured as Charpy NIS and the puncture energy, improve.

However, it is surprising that the loss of stiffness is overcompensated by the improvement in impact properties as can be seen by comparing the balances of IS balance, PS balance, IS-1 balance, PS-1 balance and PS-2 balance.

**Claims**

1. A polypropylene-polyethylene composition comprising

    a) from 75 to 99 wt.-%, preferably from 77 to 98 wt.-%, more preferably from 75 to 95 wt.-% of a mixed-plastics blend (A) comprising

       A-1) polypropylene and
       A-2) polyethylene,

    wherein the weight ratio of polypropylene to polyethylene is from 3:7 to 49:1, preferably from 4:6 to 49:1, more preferably from 5:5 to 49:1, and
    b) from 1 to 25 wt.-%, preferably from 2 to 23 wt.-%, more preferably from 5 to 20 wt.-% of a compatibilizer (B) being a C2C4 plastomer, having

       - a melting temperature Tm of below 65 °C, preferably from 25 to 45 °C, more preferably from 30 to 40 °C, determined according by DSC according to ISO 11357;
       - a melt flow rate $MFR_2$ of from 0.1 to 5.0 g/10 min, preferably from 0.1 to 3.5 g/10 min, more preferably from 0.1 to 2.5 g/10 min, determined according to ISO 1133 at a load of 2.16 kg and a temperature of 190°C, and
       - a density of from 850 to 885 kg/m$^3$, preferably from 855 to 875 kg/m$^3$, more preferably from 860 to 870 kg/m$^3$, determined according to ISO 1183,

    c) from 0 to 1.0 wt.-% of a stabilizer or mixture of stabilizers,
    all based on the total weight of the polypropylene-polyethylene composition, wherein the polypropylene-polyethylene composition has a melt flow rate $MFR_2$ of from 1.5 to 50.0 g/10 min, preferably from 1.7 to 35.0 g/10 min, more preferably from 2.0 to 25.0 g/10 min, determined according to ISO 1133 at a load of 2.16 kg and a temperature of 230°C.

2. The polypropylene-polyethylene composition according to claim 1, wherein the blend (A) has a relative amount of units derived from ethylene of from 3.5 to 60.0 wt.-%, preferably from 4.5 to 55.0 wt.-%, more preferably from 5.0 to 50.0 wt.-%, based on the total weight of blend (A).

3. The polypropylene-polyethylene composition according to claims 1 or 2, wherein the blend (A) is recovered from waste plastic material derived from post-consumer waste and/or industrial waste, preferably from post-consumer waste.

4. The polypropylene-polyethylene composition according to any of the preceding claims, wherein the blend (A) has a limonene content of from 0.1 to 100 ppm, preferably from 0.1 to 50 ppm, more preferably from 0.1 to 35 ppm, determined by using solid phase microextraction (HS-SPME-GC-MS).

5. The polypropylene-polyethylene composition according to any of the preceding claims, wherein the blend (A) has one or more or all of the following properties:

   - a tensile modulus of from 600 to 1500 MPa, preferably from 650 to 1400 MPa, more preferably from 700 to 1300 MPa, determined at 23°C according to ISO 527-2; and/or
   - a Charpy notched impact strength of from 2.5 to 10.0 kJ/m$^2$, preferably from 3.5 to 9.0 kJ/m$^2$, more preferably from 4.0 to 8.0 kJ/m$^2$, determined at 23°C according to ISO 179; and/or
   - a density of from 905 to 955 kg/m$^3$, preferably from 905 to 952 kg/m$^3$, more preferably from 905 to 950 kg/m$^3$, determined according to ISO 1183.

6. The polypropylene-polyethylene composition according to any of the preceding claims, wherein the blend (A) has a crystalline fraction (CF) content, determined by crystallization extraction (CRYSTEX), in the range from 80.0 to 96.0 wt.-%, preferably from 82.5 to 95.5 wt.-%, more preferably from 85.0 to 95.0 wt.-%, based on the total weight of the mixed-plastics blend (A),

   said crystalline fraction (CF) preferably having

   - an ethylene content (C2(CF)), determined by FT-IR spectroscopy calibrated by quantitative $^{13}$C-NMR spectroscopy, in the range of from 2.5 to 55.0 wt.-%, preferably from 3.5 to 52.5 wt.-%, more preferably from 5.0 to 50.0 wt.-%, and/or
   - an intrinsic viscosity (iV(CF)), as measured in decalin according to DIN ISO 1628/1 at 135°C, of less than 2.5 dl/g, preferably in the range of from 1.1 to 2.3 dl/g, more preferably from 1.4 to 2.1 dl/g;

   and a soluble fraction (SF) content, determined by crystallization extraction (CRYSTEX), in the range from 4.0 to 20.0 wt.-%, preferably from 4.5 to 17.5 wt.-%, more preferably from 5.0 to 15.0 wt.-%, based on the total weight of the mixed-plastics blend (A),
   said soluble fraction (SF) preferably having

   - an ethylene content (C2(SF)), as determined by FT-IR spectroscopy calibrated by quantitative $^{13}$C-NMR spectroscopy, in the range of from 20.0 to 55.0 wt.-%, preferably from 22.0 to 52.5 wt.-%, more preferably from 24.0 to 50.0 wt.-%; and/or
   - an intrinsic viscosity (iV(SF)), determined according to ISO 1628-3, in the range of from 0.9 to 2.1 dl/g, preferably from 1.0 to 2.0 dl/g, more preferably from 1.1 to 1.9 dl/g.

7. The polypropylene-polyethylene composition according to any of the preceding claims, wherein the compatibilizer (B) has a glass transition temperature Tg of -40 to -75°C, preferably -45 to -70°C, more preferably -50 to -65°C, determined by DSC according to ISO 11357.

8. The polypropylene-polyethylene composition according to any of the preceding claims having one or more or all of the following properties:

   - a tensile modulus of from 500 to 1400 MPa, preferably from 600 to 1350 MPa, more preferably from 650 to 1300 MPa, determined at 23°C according to ISO 527-2;
   - a Charpy notched impact strength of from 5.0 to 50.0 kJ/m$^2$, preferably from 6.0 to 40.0 kJ/m$^2$, more preferably from 6.5 to 30.0 kJ/m$^2$, determined at 23°C according to ISO 179;
   - a puncture energy of from 8.5 to 35.0 J, preferably from 10.0 to 30.0 J, more preferably from 12.0 to 25.0 J, determined at 23°C according to ISO 6603-2 on specimens having a 2 mm thickness;
   - a puncture energy of from 0.4 to 35.0 J, preferably from 0.5 to 30.0 J, more preferably from 0.6 to 25.0 J, determined at -30°C according to ISO 6603-2 on specimens having a 2 mm thickness.

9. The polypropylene-polyethylene composition according to any of the preceding claims having an impact - stiffness (IS) balance being the product of Charpy impact strength and tensile modulus of from 4750 to 40000 MPa·kJ/m$^2$, preferably from 5000 to 35000 MPa·kJ/m$^2$, more preferably from 5100 to 30000 MPa·kJ/m$^2$, wherein the tensile modulus is determined at 23°C according to ISO 527-2 and the Charpy impact strength is determined at 23°C according to ISO 179.

10. The polypropylene-polyethylene composition according to any of the preceding claims having an puncture energy - stiffness (PS) balance being the product of puncture energy and tensile modulus of from 9750 to 30000 MPa J, preferably from 10000 to 27500 MPa·J, more preferably from 10500 to 25000 MPa·J, wherein puncture energy is determined at 23°C according to ISO 6603-2 on specimens having a 2 mm thickness and the tensile modulus is determined at 23°C according to ISO 527-2.

11. The polypropylene-polyethylene composition according to any of the preceding claims having an impact - stiffness (IS) balance in relation to the weight amount of compatibilizer (B) of from 750 to 3000, preferably from 800 to 2750, more preferably from 850 to 2650, calculated according to the formula

$$IS - 1 = \frac{Charpy\ NIS \cdot TM}{wt. - \%\ (B)}$$

with

IS-1 is the impact - stiffness balance in relation to the weight amount of compatibilizer (B) in [(MPa·kJ) / (vnt.-%·m$^2$)];
Charpy NIS is the Charpy notched impact strength in kJ/m$^2$, determined at 23°C according to ISO 179;
TM is the tensile modulus in MPa, determined at 23°C according to ISO 527-2; and
wt.-% (B) is the weight amount of compatibilizer (B) in the polypropylene-polyethylene composition in wt.-%.

12. The polypropylene-polyethylene composition according to any of the preceding claims having a first puncture energy - stiffness (PS-1) balance in relation to the weight amount of compatibilizer (B) of from 500 to 7500, preferably from 600 to 7000, more preferably from 750 to 6000, calculated according to the formula

$$PS - 1 = \frac{PE\ (23°C) \cdot TM}{wt. - \%\ (B)}$$

with

PS-1 is the first puncture energy - stiffness balance in relation to the weight amount of compatibilizer (B) in [(MPa·J) / wt.-%];
PE (23°C) is the puncture energy in J, determined at 23°C according to ISO 6603-2 on specimens having a 2 mm thickness;
TM is the tensile modulus in MPa, determined at 23°C according to ISO 527-2; and
wt.-% (B) is the weight amount of compatibilizer (B) in the polypropylene-polyethylene composition in wt.-%.

13. The polypropylene-polyethylene composition according to any of the preceding claims having a second puncture energy - stiffness (PS-2) balance in relation to the weight amount of compatibilizer (B) of from 40 to 1200, preferably from 50 to 1100, more preferably from 60 to 1000, calculated according to the formula

$$PS - 2 = \frac{PE\ (-30°C) \cdot TM}{wt. - \%\ (B)}$$

with

PS-2 is the second puncture energy - stiffness balance in relation to the weight amount of compatibilizer (B) in [(MPa·J) / wt.-%];
PE (-30°C) is the puncture energy in J, determined at -30°C according to ISO 6603-2 on specimens having a 2 mm thickness;
TM is the tensile modulus in MPa, determined at 23°C according to ISO 527-2; and
wt.-% (B) is the weight amount of compatibilizer (B) in the polypropylene-polyethylene composition in wt.-%.

14. An article comprising the polypropylene - polyethylene composition according to any one of the preceding claims.

15. Use of the compatibilizer (B) in the polypropylene - polyethylene composition according to any one of claims 1 to 13 for increasing the puncture energy - stiffness (PS) balance of a polypropylene - polyethylene composition in the range of 125% to 500%, preferably 150% to 300% of the puncture energy - stiffness (PS) balance of blend (A),
wherein the puncture energy - stiffness (PS) balance is the product of the puncture energy, determined at 23°C according to ISO 6603-2 on specimens having a 2 mm thickness, and the tensile modulus, determined at 23°C according to ISO 527-2.

## EUROPEAN SEARCH REPORT

**Application Number**

EP 24 16 5026

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2020/201020 A1 (BOREALIS AG [AT]) 8 October 2020 (2020-10-08) * the whole document * ----- | 1-15 | INV. C08L23/12 |
| A | WO 2020/201084 A1 (BOREALIS AG [AT]) 8 October 2020 (2020-10-08) * the whole document * ----- | 1-15 | |

**TECHNICAL FIELDS SEARCHED (IPC)**

C08L

The present search report has been drawn up for all claims

| Place of search | Date of completion of the search | Examiner |
|---|---|---|
| Munich | 13 August 2024 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 5026

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2024

| Patent document cited in search report | Publication date | Patent family member(s) | Publication date |
|---|---|---|---|
| WO 2020201020 A1 | 08-10-2020 | CN 113646378 A<br>EP 3947554 A1<br>KR 20210135614 A<br>WO 2020201020 A1 | 12-11-2021<br>09-02-2022<br>15-11-2021<br>08-10-2020 |
| WO 2020201084 A1 | 08-10-2020 | BR 112021019230 A2<br>CA 3135081 A1<br>EP 3947555 A1<br>US 2022177679 A1<br>WO 2020201084 A1 | 30-11-2021<br>08-10-2020<br>09-02-2022<br>09-06-2022<br>08-10-2020 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015169690 A1

- EP 3786190 A1

### Non-patent literature cited in the description

- **JOSE et al.** *J. Polym. Res.*, 2013, vol. 20, 303
- *CHEMICAL ABSTRACTS*, 6683-19-8
- *CHEMICAL ABSTRACTS*, 31570-04-4
- *CHEMICAL ABSTRACTS*, 693- 36-7
- *CHEMICAL ABSTRACTS*, 11097-59-9
- *CHEMICAL ABSTRACTS*, 1592-23-0
- *CHEMICAL ABSTRACTS*, 557-05-1
- *CHEMICAL ABSTRACTS*, 60676-86-0
- *CHEMICAL ABSTRACTS*, 7631-86-9
- *CHEMICAL ABSTRACTS*, 112926-00-8
- *CHEMICAL ABSTRACTS*, 1318-74-7
- *CHEMICAL ABSTRACTS*, 1344-00-9
- *CHEMICAL ABSTRACTS*, 92704-41-1
- *CHEMICAL ABSTRACTS*, 1327-36-2
- *CHEMICAL ABSTRACTS*, 1344-95-2
- *CHEMICAL ABSTRACTS*, 1344-01-0
- *CHEMICAL ABSTRACTS*, 52829-07-9
- *CHEMICAL ABSTRACTS*, 1843-05-6
- *CHEMICAL ABSTRACTS*, 532-32-1
- *CHEMICAL ABSTRACTS*, 135861-56-2
- *CHEMICAL ABSTRACTS*, 97593-29-8
- *CHEMICAL ABSTRACTS*, 71786-60-2
- *CHEMICAL ABSTRACTS*, 61791-31-9
- *CHEMICAL ABSTRACTS*, 204-393-1
- **VAN GEMERT L. J.** Odour Thresholds: Compilations of odour threshold values in air, water and other media. *Utrecht, Oliemans Punter & Partners BV*, 2011
- **LJILJANA JEREMIC** ; **ANDREAS ALBRECHT** ; **MARTINA SANDHOLZER** ; **MARKUS GAHLEIT- NER**. Rapid characterization of high-impact ethylene-propylene copolymer composition by crystallization extraction separation: comparability to standard separation methods. *International Journal of Polymer Analysis and Characterization*, 2020, vol. 25 (8), 581-596